# EUROPÄISCHE PATENTANMELDUNG

(11) **EP 3 623 102 A1**
(43) Veröffentlichungstag der Anmeldung: **18.03.2020**
(21) Anmeldenummer: 19196928.6
(22) Anmeldetag: 12.09.2019
(51) Int. Cl.: B23Q 1/70, B23Q 17/22, B23Q 23/00, B23Q 39/00

(54) **VERFAHREN ZUR AUSRICHTUNG EINER SPINDEL UND WERKZEUGMASCHINE**

(30) Priorität: 17.09.2018 DE 102018122765
(71) Anmelder: Chiron-Werke GmbH & Co. KG, 78532 Tuttlingen (DE)
(72) Erfinder: Mattes, Alwin, 78549 Spaichingen (DE); Mazzeo, Frank, 78588 Denkingen (DE); Glöckler, Sebastian, 88637 Leibergingen-Thalheim (DE); Schreyeck, Patrick, 72362 Nusplingen (DE)
(74) Vertreter: Witte, Weller & Partner Patentanwälte mbB

(57) **Zusammenfassung**

Die Offenbarung betrifft ein Verfahren zur Ausrichtung einer Spindel (40; 70, 72) einer Werkzeugmaschine (10), insbesondere zum Ausrichten einer Werkzeugspindel (42), umfassend Probemontage der Spindel (40; 70, 72) an einem Spindelgehäuse (38; 68), umfassend mittelbare oder unmittelbare Befestigung einer Anlagefläche (118) der Spindel (40; 70, 72) an einer Aufnahmefläche (110) des Spindelgehäuses (38; 68); Ermitteln einer Ist-Abweichung der Spindel (40; 70, 72), insbesondere einer Ist-Verkippung einer Längsachse (74, 76; 116) der Spindel (40; 70, 72); Auswahl einer Justierscheibe (128; 164, 186, 188) in Abhängigkeit von der ermittelten Ist-Abweichung, wobei die Justierscheibe (128; 164, 186, 188) keilförmig gestaltet ist; und Anordnen der Justierscheibe (128; 164, 186, 188) zwischen der Anlagefläche (118) der Spindel (40; 70, 72) und der Aufnahmefläche (110) des Spindelgehäuses (38; 68) in einer Drehorientierung, die die Ist-Abweichung zumindest teilweise korrigiert. Die Offenbarung betrifft ferner eine Werkzeugmaschine (10) sowie eine Verwendung eines Satzes (182) von Justierscheiben (128; 164, 186, 188).

## Beschreibung

Die vorliegende Offenbarung betrifft ein Verfahren zur Ausrichtung einer Spindel, beispielsweise einer Motorspindel oder einer mit einem Motor gekoppelten Spindel, einer Werkzeugmaschine, insbesondere zum Ausrichten einer Werkzeugspindel. Ferner betrifft die vorliegende Offenbarung ein Verfahren zum Ausrichten von Spindeln einer Doppelspindelanordnung einer Werkzeugmaschine. Daneben betrifft die vorliegende Offenbarung eine entsprechende Werkzeugmaschine sowie Verwendungen eines Satzes von Justierscheiben zur Ausrichtung einer Motorspindel.

Aus der DE 198 59 360 A1 ist eine Werkzeugmaschine bekannt, die eine Doppelspindel aufweist. Zur Positionskorrektur für die Spindeln der Doppelspindel sind Piezo-Aktoren vorgesehen. Auf diese Weise soll eine automatische und adaptive Ausrichtung der Spindeln ermöglicht werden. Es hat sich jedoch gezeigt, dass derartige Ansätze bei der praktischen Umsetzung diverse Herausforderungen mit sich bringen, etwa betreffend die Steifigkeit. Dies wirkt sich wiederum nachteilig auf die zu erzielende Genauigkeit aus.

Aus der DE 20 2008 014 645 U1 eine Werkzeugmaschine mit einer Bearbeitungseinheit bekannt, mit einem hohlzylindrischen Spindelgehäuse, einer im Spindelgehäuse über eine vordere und eine hintere Lageranordnung gehaltene Spindelbuchse, und einem Elektromotor als Direktantrieb für eine Arbeitsspindel, dessen radial äußerer Stator an der Innenwandung der Spindelbuchse und dessen Rotor auf der Umfangsfläche der Arbeitsspindel befestigt sind, wobei eine der die Spindelbuchse in dem Spindelgehäuse haltenden Lageranordnungen verstellbar ist und Stellmittel zum Einstellen der Achsausrichtung der Spindelbuchse im Lagergehäuse aufweist.

Aus der DE 1 221 078 A ist eine Einrichtung zum Ausgleich von Wärmeausdehnungen bei einer Werkzeugmaschinenspindel bekannt. Zielsetzung ist, während des Arbeitens der Werkzeugmaschine in den Maschinenteilen und in den Fräswerkzeugen auftretende Temperaturänderungen zu kompensieren. Die DE 42 14 935 A1 beschäftigt sich mit Linearführungen und mit Maßnahmen zur Kompensation von Fehlausrichtungen, etwa Parallelitätsfehlern. Aus der CH 687 782 A5 ist ein Verfahren zur Justierung einer Bremsscheiben-Drehmaschine für den mobilen Einsatz bekannt. Die Maschine wird an der Radnabe befestigt und in Bezug auf einen Bremssattel ausgerichtet, um die Bremsscheibe planparallel abzudrehen.

Die Ausrichtung von Spindeln, etwa von Motorspindeln oder Spindeln mit Motor, insbesondere von Bearbeitungsspindeln (auch bezeichnet als Hauptspindeln), ist von hoher Bedeutung für die mit der Werkzeugmaschine zu erzielende Genauigkeit. Häufig ist die Rechtwinkligkeit zwischen Spindel und Spannfläche für das Werkstück ein wichtiger Parameter für die Genauigkeit. Dies trifft umso mehr im Falle von Gestaltungen zu, bei denen zwei Spindeln mit Motor, insbesondere zwei Werkzeugspindeln, nebeneinander angeordnet sind. Eine solche Anordnung wird auch als Doppelspindelanordnung bezeichnet. Die beiden Spindeln können in einem gemeinsamen Gehäuse oder in separaten Gehäusen angeordnet sein.

Doppelspindelanordnungen können genutzt werden, um die Produktivität zu erhöhen, indem zwei Werkstücke parallel bearbeitet werden. Doppelspindelanordnungen werden jedoch auch genutzt, um unterschiedliche Bearbeitungsvorgänge an einem Werkstück durchzuführen, etwa mit verschiedenen Werkzeugen. Für viele Anwendungsfälle muss sichergestellt werden, dass die beiden Spindeln parallel zueinander ausgerichtet sind. Betreffend die Parallelität sind nur minimale Abweichungen tolerierbar.

Auch bei Anordnungen mit lediglich einer Werkzeugspindel bestehen hohe Genauigkeitsanforderungen an die Ausrichtung der Werkzeugspindel gegenüber einer Werkstückauflage, etwa gegenüber einem Tisch oder einer Wiege. Häufig geht es darum, die Spindel möglichst rechtwinklig zu einem Werkstücktisch oder einer Wiege (zumindest in deren Neutralstellung) auszurichten.

Werkzeugspindeln sind regelmäßig als Motorspindeln gestaltet. Die Spindeln sind beispielsweise patronenartig ausgeführt und weisen regelmäßig integrierte Antriebe auf. Die Spindeln sind an einem Spindelgehäuse aufnehmbar. Bei dem Spindelgehäuse kann es sich grundsätzlich um ein unbewegliches/fixes Spindelgehäuse handeln. Regelmäßig sind jedoch Spindelgehäuse an verfahrbaren Schlitten oder direkt an Führungen aufgenommen, um die Spindel und ein daran aufgenommenes Werkzeug gegenüber dem Werkstück bewegen zu können. Hierbei kommt es auf eine exakte Ausrichtung der Kontaktflächen/Fügeflächen von Spindel und Spindelgehäuse an. Es ist jedoch auch vorstellbar, Spindeln zu verwenden, die keinen integrierten Motor (Rotorwelle weist Werkzeugaufnahme auf) umfassen, sondern anderweitig mit einem Motor gekoppelt oder koppelbar sind. Solche Spindeln können als Spindel mit Motor bezeichnet werden.

Beispielsweise weist eine Spindel eine axiale Anlagefläche sowie eine Zylinderpassfläche auf, die für die Montage genutzt werden. Am Spindelgehäuse ist beispielsweise eine Gegenfläche (Aufnahmefläche) vorgesehen. Die Spindeln bzw. die Spindelkörper werden direkt oder indirekt (über Zwischenelemente) am Spindelgehäuse befestigt. Beispielsweise ist eine sogenannte Montageplatte (auch bezeichnet als Motorplatte) vorgesehen, welche der Spindel und dem Spindelgehäuse zwischengeordnet ist.

Beteiligte Kontaktflächen für die Montage der Spindeln müssen hochgenau gefertigt werden. Gleichwohl sind in der Praxis fertigungs- und montagebedingt (geringe) Lageabweichungen und/oder Gestaltabweichungen zu beobachten, die schlussendlich zu einer fehlerbehafteten Ausrichtung der Spindeln führen können. Hierbei handelt es sich häufig um Neigungsfehler (Kippfehler) der Spindeln.

Deshalb ist es regelmäßig erforderlich, die Spindel bei der Montage genau auszurichten. Dies umfasst häufig zeitaufwendige manuelle Tätigkeiten. Beispielsweise umfasst die manuelle Ausrichtung die Montage eines Messdorns in der Werkzeugaufnahme und eine Überprüfung der Längsachse der Motorspindel parallel zur Verfahrachse des Spindelgehäuses (etwa in Z-Richtung) über geeignete Messmittel, die an den Messdorn angreifen. Der Bezug des Messmittels kann beispielsweise die Werkstückauflage sein. Auf diese Weise kann ein Kippfehler der Spindel ermittelt werden.

Eine Möglichkeit zur Kompensation besteht darin, Kontaktflächen am Spindelgehäuse in Abhängigkeit vom ermittelten Kippfehler zu (minimal) bearbeiten, etwa mittels Schaben. Hierbei handelt es sich um einen zeitaufwendigen iterativen Vorgang, der hohe Anforderungen an die Qualifikation und Erfahrung der Werker stellt.

Vor diesem Hintergrund liegt der vorliegenden Offenbarung die Aufgabe zugrunde, ein Verfahren zur Ausrichtung einer Spindel einer Werkzeugmaschine anzugeben, das eine schnelle und gleichwohl hochgenaue Ausrichtung der Spindel, insbesondere betreffend deren Längsachse, ermöglicht. Vorzugsweise erlaubt das Verfahren die Ausrichtung ohne zusätzliche Nachbearbeitungen/Feinbearbeitungen an der Spindel bzw. am Spindelgehäuse. Ferner soll das Verfahren reproduzierbar sein und nach Möglichkeit zusätzliche Iterationsschritte überflüssig machen. Insbesondere soll das Verfahren für die Ausrichtung zweier Spindeln einer Doppelspindelanordnung geeignet sein. Daneben soll im Rahmen der vorliegenden Offenbarung eine Werkzeugmaschine mit hochgenau ausgerichteter Werkzeugspindel angegeben werden.

Das Verfahren betreffend wird die Aufgabe der Offenbarung durch ein Verfahren zur Ausrichtung einer Spindel einer Werkzeugmaschine, insbesondere zum Ausrichten einer Werkzeugspindel, gelöst, mit den folgenden Schritten:
- Probemontage der Spindel an einem Spindelgehäuse, umfassend mittelbare oder unmittelbare Befestigung einer Anlagefläche der Spindel an einer Aufnahmefläche des Spindelgehäuses,
- Ermitteln einer Ist-Abweichung der Spindel, insbesondere einer Ist-Verkippung (Neigungsfehler) einer Längsachse der Spindel,
- Auswahl einer Justierscheibe in Abhängigkeit von der ermittelten Ist-Abweichung, wobei die Justierscheibe keilförmig gestaltet ist, und
- Anordnen der Justierscheibe zwischen der Anlagefläche der Spindel und der Aufnahmefläche des Spindelgehäuses in einer Drehorientierung, die die Ist-Abweichung zumindest teilweise korrigiert.

Auf diese Weise wird die Aufgabe der Erfindung vollständig gelöst.

Erfindungsgemäß erlauben die Justierscheiben eine hochgenaue Ausrichtung und Anordnung der Spindel ohne manuelle Nachbearbeitung am Sitz der Spindel am/im Spindelgehäuse. Dies verringert den Aufwand für die Ausrichtung der Spindel deutlich. Durch Auswahl einer geeigneten Justierscheibe kann gleichwohl eine hochgenaue Ausrichtung erzielt werden. Gemäß beispielhaften Ausführungsformen wird die Justierscheibe aus einem Satz ausgewählt, der mehrere Justierscheiben verschiedener Keilstärke enthält.

Die Drehorientierung der Justierscheibe wird vorzugsweise derart gewählt, dass der durch die Justierscheibe aufgrund der kreisförmigen Gestaltung eingebrachte "Fehler" der Ist-Abweichung entgegenwirkt. Gemäß beispielhaften Ausführungsformen genügt eine einzige Justierscheibe, um die Spindel hinreichend auszurichten. Gemäß beispielhaften Ausführungsformen ist das Ziel der Ausrichtung die Rechtwinkligkeit der Spindel in Bezug auf eine Werkstückauflage oder Werkstückaufnahme, zumindest in einer Neutrallage der Werkstückaufnahme. Alternativ oder zusätzlich kann das Ziel der Ausrichtung eine Parallelität zwischen der Spindel und einem Bezug sein. Bei dem Bezug kann es sich allgemein um eine Achse im Maschinenkoordinatensystem und/oder um eine Spindelachse einer weiteren Spindel (bei Doppelspindelanordnung) handeln.

Im Nachgang zur Anordnung der Justierscheibe zwischen der Anlagefläche der Spindel und der Aufnahmefläche des Spindelgehäuses kann die Spindel final montiert und fixiert werden. Die Begriff "zwischen" ist nicht derart einschränkend zur verstehen, dass die Justierscheibe genau und direkt zwischen der Anlagefläche der Spindel und der Aufnahmefläche des Spindelgehäuses. Der Begriff "zwischen" ist nicht streng strukturell sondern funktional zu verstehen.

Die Justierscheibe ist keilförmig gestaltet. Die Justierscheibe umfasst voneinander abgewandte Stirnflächen, die zueinander nicht parallel sind. Mit anderen Worten ergibt sich die Keilform in einer Seitenansicht bzw. bei einem Schnitt durch die Justierscheibe. Mit anderen Worten ist die Justierscheibe nicht unbedingt exzentrisch gestaltet. Stattdessen liegen beispielsweise in der Längsrichtung (der Spindel) zueinander minimal geneigte Stirnflächen vor, die eine Verkippung zwischen der Spindel und dem Spindelgehäuse bewirken, die der Ist-Abweichung entgegenwirkt. Andere Gestaltungen sind denkbar.

Die Ist-Verkippung kann in Bezug auf eine Werkstückaufnahme (Werkstückauflage, Spannfläche, etc.) bestimmt werden. Mit anderen Worten kann die Ist-Abweichung eine Abweichung (der Lage und Orientierung der Spindelachse) von der gewünschten idealen Rechtwinkligkeit zwischen der Spindel und der Spannfläche beschreiben. Ferner kann die Ist-Abweichung auch einen Parallelitätsfehler (Neigungsfehler) zwischen zwei Spindeln beschreiben. Die Ist-Verkippung kann ferner in Bezug auf eine Verfahrachse einer Relativbewegung zwischen dem Spindelgehäuses und der Werkstückaufnahme (etwa in Z-Richtung) bestimmt werden.

Generell weist die Justierscheibe nur eine minimale Keilform auf. Regelmäßig geht es um Abweichungen von weniger als 100 µm (Mikrometer), beispielsweise bezogen auf einen Außendurchmesser der Justierscheibe im Bereich von zwischen 200 mm und 300 mm (Millimeter). Das Verhältnis zwischen der Keilstärke und dem Durchmesser der Justierscheibe entspricht einem Keilwinkel. Ausgehend von diesem Keilwinkel können Keilstärken für andere Durchmesser bestimmt werden. Die Keilwinkel sind nur sehr klein. Die Justierscheiben können durch geeignete Fein- oder Feinstbearbeitungsverfahren hochgenau hergestellt werden. Die Justierscheibe bringt einen gewollten Fehler in das System ein, der die Ist-Abweichung zumindest teilweise kompensiert.

Das Spindelgehäuse kann grundsätzlich auch als Spindelkasten bezeichnet werden. Das Spindelgehäuse bildet ein Außengehäuse, in dem beispielsweise eine patronenartig gestaltete Spindel aufnehmbar ist. Die Spindel selbst weist einen Spindelkörper mit einem Gehäuse auf. Im Spindelkörper der Spindeln können demgemäß Antriebe, Lagerungen, Abtriebswellen, Werkzeugaufnahmen, etc. angeordnet sein.

Die Ist-Abweichung kann auf Herstellertoleranzen und/oder Montagetoleranzen zurückgehen. Entsprechende Fehler können sowohl am Spindelgehäuse als auch an der Spindel selbst auftreten.

Die Spindel kann beispielsweise über eine sogenannte Motorplatte/Montageplatte mittelbar am Spindelgehäuse aufgenommen werden. Auch eine direkte Aufnahme ist vorstellbar.

Die Justierscheibe weist zueinander (minimal) geneigte Stirnflächen auf. Makroskopisch betrachtet können die Stirnflächen nahezu parallel sein. Gleichwohl weisen die Justierscheiben eine minimale Keilform auf. Die Richtung des Keils wird beispielsweise durch ein Indikatorelement angezeigt. Die Justierscheibe kann etwa als (dünner) Ring gestaltet sein, der zwischen dem Spindelgehäuse und der Motorplatte aufgenommen wird.

Die Längsachse der Spindel ist idealerweise parallel zu einer Z-Achse (z.B. eine sich in Z erstreckende Verfahrachse), sofern kein Kippfehler vorhanden ist. Demgemäß besteht ein Ausrichtungsziel darin, die Spindel möglichst senkrecht zu einer Ebene auszurichten, die durch eine X-Achse und eine Y-Achse gebildet wird.

Die Ist-Abweichung (der Längsachse der Spindel) kann beispielsweise ermittelt werden, indem eine Messuhr oder dergleichen verwendet wird, die mit einem Messdorn gekoppelt ist, der an der Spindel aufgenommen wird. Die Messuhr wird in geeigneter Weise mit einem Bezugselement (Werkstückspannfläche, benachbarte Spindel, etc.) gekoppelt.

Beispielhaft kann die Messuhr derart angeordnet und ausgerichtet werden, dass Abweichungen in der Y-Richtung erfasst werden. Die Abweichungen in der Y-Richtung können erfasst werden, indem eine Z-Bewegung zwischen der Spindel und einer Werkstückauflage erzeugt wird. Die Messuhr bestimmt demgemäß während dieser Relativbewegung (in Z) Abweichungen in der Y-Richtung.

Ferner kann die Messuhr derart angeordnet und ausgerichtet werden, dass Abweichungen in der X-Richtung erfasst werden. Die Abweichungen in der X-Richtung können erfasst werden, indem eine Z-Bewegung zwischen der Spindel und einer Werkstückauflage erzeugt wird. Die Messuhr bestimmt demgemäß während dieser Relativbewegung (in Z) Abweichungen in der X-Richtung.

Aus den Abweichungen in der Y-Richtung und den Abweichungen in der X-Richtung kann schlussendlich ein Vektor hergeleitet werden, der die Verkippung beschreibt. Die Justierscheiben weisen aufgrund ihrer leichten Keilform definierte Abweichungen auf, die abhängig von der Drehlage der Justierscheiben die Verkippung der Spindel zumindest teilweise kompensieren. Die Keilform definiert auch einen Vektor der "Verkippung" der Justierscheibe. Die beiden Vektoren können bei der Montage der Justierscheibe zueinander ausgerichtet werden, so dass sich eine möglichst vollständige Kompensation ergibt.

Es wird daher ferner ein Algorithmus oder ein geeignetes Tabellenwerk vorgeschlagen, auf dessen Basis die Auswahl der Justierscheiben sowie deren Drehorientierung vereinfacht werden soll. Ziel der Auswahl ist häufig eine minimale Restabweichung nach der Montage der Justierscheibe. Eine vollständige Eliminierung des Fehlers ist regelmäßig nicht möglich und auch nicht erforderlich. Restfehler sind beispielsweise durch die begrenzte Anzahl an Rotationslagen der Justierscheibe bzw. durch die Abstufung der "Keilstärken" bedingt.

Gemäß einer beispielhaften Ausgestaltung weist das Verfahren ferner die folgenden Schritte auf:
- Bereitstellung eines Satzes mit einer Mehrzahl von Justierscheiben mit unterschiedlichen Keilstärken,
- Auswahl derjenigen Justierscheibe für die Korrektur, deren Keilstärke der ermittelten Ist-Abweichung zumindest näherungsweise entspricht.

Auf diese Weise kann durch Bereitstellung einer überschaubaren Anzahl von Justierscheiben mit unterschiedlichen Keilstärken für einen beträchtlichen Bereich möglicher Abweichungen jeweils eine geeignete Justierscheibe bereitgestellt werden, um die Orientierung der Spindel zu korrigieren. Es versteht sich, dass in Fällen größerer Abweichung grundsätzlich auch die Möglichkeit besteht, eine Mehrzahl von Justierscheiben zu verbauen, deren Keilgestaltung sich summiert.

Gemäß einer weiteren beispielhaften Ausführungsform umfasst das Verfahren ferner die Bereitstellung eines Satzes mit zumindest drei Justierscheiben mit unterschiedlichen Keilstärken. Es versteht sich, dass auch Sätze mit vier, fünf oder gar mehr Justierscheiben mit unterschiedlichen Keilstärken vorstellbar sind. Sofern eine Werkzeugmaschine mit Doppelspindelanordnung betroffen ist, kann auch eine doppelte Anzahl an Justierscheiben der jeweiligen Typen vorgesehen sein. Die Justierscheiben des Satzes können an erwartete Fertigungstoleranzen/Montagetoleranzen angepasst sein.

Vorzugsweise ist ein Tabellenwerk oder ein in einer Software umgesetzte Algorithmus vorgesehen, auf dessen Basis in einfacher Weise die jeweilige Justierscheibe inklusive der vorgeschlagenen Drehorientierung aus dem Satz von Justierscheiben auswählbar ist. Als Eingangsgröße für die Auswahl dient die zuvor bestimmte Ist-Abweichung. Die Ist-Abweichung verkörpert gewissermaßen den Ist-Vektor bzw. die Ist-Verkippung der Längsachse der Spindel. Es versteht sich, dass die Ist-Abweichung auch durch ΔX (Delta X) und ΔY (Delta Y)-Werte beschrieben werden kann, welche Abweichungen eines definierten Punktes (mit definierter Z-Position) der Längsachse von einer gedachten idealen Längsachse beschreiben. Auch auf diese Weise kann der Ist-Vektor beschrieben werden.

Gemäß einer weiteren beispielhaften Ausführungsform des Verfahrens sind die Keilstärken der Justierscheiben des Satzes, bezogen auf einen Außendurchmesser der Justierscheiben, jeweils um einen Wert von etwa 5 µm bis 20 µm zueinander abgestuft. Das Inkrement beträgt daher beispielhaft 5 µm bis 20 µm. Auf diese Weise gibt es feine Abstufungen zwischen den Justierscheiben.

Auf diese Weise können feine Rest-Abweichungen ausgeglichen werden. Die Keilstärke ist die Differenz der Höhe (Dicke) der Scheibe an zwei voneinander abgewandten Enden der Scheibe, von denen eines die minimale Dicke und das andere die maximale Dicke aufweist. Ein üblicher Außendurchmesser der Justierscheiben liegt beispielsweise bei etwa 200-300 mm, zum Beispiel bei etwa 250 mm.

Zwischen zwei aufeinanderfolgenden Justierscheiben eines Satzes liegt nur ein kleines Inkrement vor. Dies ermöglicht eine hohe Genauigkeit, da der abstufungsbedingte Fehler minimiert werden kann.

Gemäß einer weiteren beispielhaften Ausführungsform des Verfahrens liegt die Keilstärke einer Justierscheibe, bezogen auf einen Außendurchmesser der Justierscheiben, gegenüber einer planparallelen Scheibe in einem Bereich zwischen 5 µm und 100 µm. Auf diese Weise können einerseits beträchtliche Abweichungen kompensiert werden und andererseits auch verhältnismäßig kleine Abweichungen noch weiter reduziert werden.

Gemäß der obigen Definition weist eine planparallele Scheibe eine Keilstärke von 0 µm auf. Sobald jedoch die voneinander abgewandten Stirnseiten der Justierscheibe leicht zueinander geneigt sind, ergibt sich die Keilstärke von größer 0 µm. Vorzugsweise ist eine der beiden Stirnseiten exakt senkrecht zur Mittenachse durch die Justierscheibe ausgerichtet. Demgemäß ist die andere Stirnseite zu dieser leicht verkippt bzw. geneigt.

Gemäß einer weiteren beispielhaften Ausführungsform ist eine Mehrzahl definierter Drehlagen für die Justierscheibe zwischen der Anlagefläche der Spindel und der Aufnahmefläche des Spindelgehäuses vorgesehen. Hierbei kann es sich etwa um eine entsprechende Anzahl an Ausnehmungen (Durchgangslöchern) für Befestigungselemente handeln. Beispielhaft ist ein Drehinkrement von 30°(Grad) oder 15°vorgesehen. Dies entspricht 12 oder 24 Ausnehmungen.

Ähnlich wie bei einer Uhr kann sodann vorgegeben werden, in welcher Drehorientierung die Justierscheibe zu verbauen ist. Die Orientierung und Lagesicherung der Drehlage kann über Stifte, Schrauben, Bolzen und entsprechende Gegenelemente erfolgen.

Der Algorithmus bzw. die Tabelle führt bei gegebener Ist-Abweichung folglich zu einer Empfehlung für eine Justierscheibe einer bestimmten Keilstärke, die in einer bestimmten Drehposition (zum Beispiel "9:00 Uhr-Lage") einzubauen ist. Dies vereinfacht den Vorgang der Ausrichtung und Justierung deutlich. Die Optimierungsaufgabe stellt sich das Ziel, nach der Montage der Justierscheibe einen möglichst kleinen Restfehler zu haben.

Gemäß einer weiteren beispielhaften Ausführungsform des Verfahrens wird die Keilscheibe derart montiert, dass der auf die Keilgestalt der Justierscheibe zurückzuführende Fehler der Ist-Abweichung der Spindel entgegengerichtet ist. Dies gilt vorzugsweise zumindest innerhalb der Inkremente, die durch die Abstufung der Keilstärken sowie die definierte Anzahl an Drehlagen (Winkellage) vorgegeben sind.

Gemäß einer weiteren beispielhaften Ausführungsform des Verfahrens umfasst die Ermittlung der Ist-Abweichung eine Erfassung einer Abweichung eines Referenzpunktes in zwei Raumrichtungen in einer von der Anlagefläche der Spindel und der Aufnahmefläche des Spindelgehäuses beabstandeten Ebene, die senkrecht zur Längsachse der Spindel orientiert ist, zumindest näherungsweise. Auf diese Weise kann der "Vektor" der Abweichung ermittelt werden. Die Abweichungen in X und Y können etwa über eine Messuhr oder vergleichbaren Messmittel bestimmt werden, die/das an einen Messdorn oder ein vergleichbares Element angreift, während dieses durch die Spindel definiert verfahren wird. Sofern die Z-Lage des Referenzpunktes feststeht oder gar vordefiniert ist, kann die Ist-Abweichung auf Basis lediglich zweier Werte (ΔX und ΔY) bestimmt werden, wobei im Ergebnis die zu wählende Justierscheibe und deren Einbaulage ausgegeben/abgelesen werden kann.

Gemäß einer weiteren beispielhaften Ausführungsform des Verfahrens umfasst die Ermittlung der Ist-Abweichung eine Erfassung einer Ist-Winkelabweichung und einer Ist-Drehlage der Ist-Winkelabweichung der Spindel. Auch auf diese Weise kann die Ist-Abweichung (Neigungsfehler) bestimmt werden. Gemäß diesem Ansatz wird der Ist-Vektor (Verkippung der Längsachse der Spindel) direkt gemessen. Die Information über die Ist-Abweichung umfasst demgemäß einen Winkel (Kippwinkel gegenüber einer idealen Orientierung der Längsachse) sowie eine Drehlage ("Uhrzeiger"), in der die Verkippung deutlich gegeben ist.

Gemäß einer weiteren beispielhaften Ausführungsform des Verfahrens wird die Spindel über eine Montageplatte am Spindelgehäuse befestigt, wobei die Montageplatte mit der Aufnahmefläche des Spindelgehäuses und der Anlagefläche der Spindel verbunden wird. Demgemäß ist die Spindel nicht direkt über ihren Spindelkörper sondern indirekt über eine (gegebenenfalls separate) Montageplatte mit dem Spindelgehäuse verbunden.

Gemäß einer weiteren beispielhaften Ausführungsform des Verfahrens erfolgt ferner zur Anpassung/Ausrichtung der Lage in der Z-Richtung in Abhängigkeit von einer gemessenen Z-Abweichung eine Auswahl eines geeigneten Abstimmrings, wobei der Abstimmring der Spindel und dem Spindelgehäuse zwischengeschaltet wird. Demgemäß erfolgt die Montage der Spindel beispielhaft unter Nutzung sowohl der Justierscheibe als auch des Abstimmrings. Die Justierscheibe kompensiert den Kippfehler der Längsachse. Der Abstimmring kompensiert etwaige Abweichungen in der Z-Richtung. Der Abstimmring ist demgemäß planparallel gestaltet.

Gemäß einer beispielhaften Ausführungsform ist demgemäß die Spindel über die Justierscheibe, die Montageplatte und über den Abstimmring mit dem Spindelgehäuse gekoppelt.

Gemäß einer beispielhaften Ausführungsform erfolgt die Montage der Spindel derart, dass der Abstimmring und die Justierscheibe konzentrisch (ineinander) angeordnet sind, wobei sowohl der Abstimmring als auch die Justierscheibe stirnseitig mit der Montageplatte verbunden sind, wobei der Abstimmring mit seiner entgegengesetzten Stirnseite die Anlagefläche der Spindel kontaktiert, und wobei die Justierscheibe mit ihrer entgegengesetzten Stirnseite die Aufnahmefläche des Spindelgehäuses kontaktiert. Demgemäß erfolgt die Verbindung zwischen dem Spindelgehäuse und der Spindel über die Justierscheibe, die Montageplatte und über den Abstimmring. Gemäß dieser Ausführungsform ist der Abstimmring innerhalb der Justierscheibe angeordnet. Es ist jedoch auch umgekehrt vorstellbar. Demgemäß kann der innere Ring eine Keilgestalt aufweisen und der äußere Ring planparallel gestaltet sein.

Gemäß einer weiteren beispielhaften Ausführungsform bilden der Abstimmring und die Justierscheibe ein axiales Paket. Es ist jedoch auch vorstellbar, über die Justierscheibe sowohl eine Kompensation von Kippfehlern als auch von Positionsfehlern in der Z-Richtung herbeizuführen. Demgemäß wären der Abstimmring und Justierscheibe zu einem Teil zusammengefasst.

Gemäß einer weiteren beispielhaften Ausführungsform erfolgt alternativ oder zusätzlich eine Ausrichtung der Spindel in einer Ebene senkrecht zu deren Längsachse durch zumindest ein Stellelement. Demgemäß kann eine Anpassung der X-Lage bzw. der Y-Lage erfolgen. Bei dem Stellelement kann es sich etwa um einen Exzenter oder dergleichen handeln. Üblicherweise sind nur geringe Hübe/Verfahrwege erforderlich, um eine gewünschte Ausrichtung zu erzielen. Beispielhaft ist ein solches Stellelement umfangsseitig angeordnet, etwa an/bei der Montageplatte. An einem entgegengesetzten Umfangsabschnitt ist demgemäß ein Lagerelement (etwa ein Stift oder dergleichen) vorgesehen. Eine Bewegung des Stellelements (etwa des Exzenters) bewirkt demgemäß eine leichte Verschwenkung der Spindel um das Lagerelement. Auf diese Weise können minimale Anpassungen der X-Lage bzw. der Y-Lage vorgenommen werden.

Insbesondere bei einer Gestaltung mit einer Doppelspindel ist es vorstellbar, bei einer der beiden Spindeln ein Stellelement für Anpassungen in X-Richtung sowie bei der anderen der beiden Spindeln ein Stellelement für Anpassungen in Y-Richtung vorzusehen. Demgemäß sind die Stellelemente an ihrer jeweiligen Spindel im Vergleich zur anderen Spindel umfangsseitig um etwa 90°voneinander versetzt angeordnet. Die Verstellmöglichkeit in der X-Richtung bzw. der Y-Richtung erlaubt eine exakte Positionierung der Längsachsen der beiden Spindeln. Insgesamt kann also bei einer Doppelspindel einerseits die Parallelität, ferner jedoch auch die Z-Ausrichtung und die Ausrichtung in der X-Richtung sowie der Y-Richtung beider Spindeln optimiert werden.

Gemäß einem weiteren Aspekt bezieht sich die vorliegende Offenbarung auf ein Verfahren zur Ausrichtung einer Doppelspindel einer Werkzeugmaschine, die eine erste Spindel und eine zweite Spindel aufweist, die in einem gemeinsamen Spindelgehäuse angeordnet sind, mit den folgenden Schritten:
- Ausrichtung der ersten Spindel gemäß dem Verfahren nach einer der hierin beschriebenen Ausgestaltungen, wobei die Ausrichtung gegenüber einer Werkstückaufnahme oder einer Verfahrachse erfolgt, und
- Ausrichtung der zweiten Spindel gemäß dem Verfahren nach einer der hierin beschriebenen Ausgestaltungen, wobei die Ausrichtung gegenüber der ersten Spindel erfolgt, um eine gewünschte Parallelität zwischen den beiden Spindeln zu erreichen.

Auf diese Weise können zwei nebeneinander angeordnete Spindeln hochgenau ausgerichtet werden. Gemäß einer weiteren beispielhaften Ausführungsform umfasst das Verfahren ferner einen Schritt zur Ausrichtung in der Z-Richtung. Gemäß einer weiteren beispielhaften Ausführungsform umfasst das Verfahren ferner einen Schritt zur Ausrichtung in der Z-Richtung sowie der X-Richtung und/oder der Y-Richtung.

Gemäß einer weiteren beispielhaften Ausführungsform umfasst das Verfahren ferner den folgenden Schritt:
- Ausrichtung der ersten Spindel und der zweiten Spindel in einer Ebene senkrecht zur Spindelachse,
   wobei der ersten Spindel und dem Spindelgehäuse ein erstes Stellelement, insbesondere ein erster Exzenter, zugeordnet ist,
   wobei der zweiten Spindel und dem Spindelgehäuse ein zweites Stellelement, insbesondere ein zweiter Exzenter, zugeordnet ist,
   wobei das erste Stellelement zu einer Verschiebung der ersten Spindel relativ zum Spindelgehäuse in einer ersten Richtung ausgebildet ist,
   wobei das zweite Stellelement zu einer Verschiebung der zweiten Spindel relativ zum Spindelgehäuse in einer zweiten Richtung ausgebildet ist, und
   wobei die erste Richtung und die zweite Richtung schräg zueinander orientiert sind, vorzugsweise senkrecht zueinander.

Auf diese Weise kann die Positionierung in einer Ebene parallel zur X-Achse und zur Y-Achse erfolgen. Somit kann eine gewünschte Relativposition bzw. Relativorientierung zwischen den beiden Spindel eingestellt werden.

Ferner bezieht sich die vorliegende Offenbarung auf eine Werkzeugmaschine, insbesondere eine Mehrachs-Fräsmaschine, die Folgendes aufweist:
- ein Gestell,
- eine Werkstückaufnahme zur Aufnahme zumindest eines Werkstücks, und
- einem Spindelgehäuse, das zumindest eine als Spindel gestaltete Werkzeugspindel zur Aufnahme zumindest eines Werkzeugs trägt, die um ihre Längsachse antreibbar ist,
   wobei zwischen der Werkstückaufnahme und der zumindest einen Werkzeugspindel Relativbewegungen erzeugbar sind, und
   wobei die Werkzeugspindel über eine Justierscheibe mit einer Aufnahmefläche des Spindelgehäuses gekoppelt ist, die keilförmig gestaltet und in einer Drehorientierung zwischen der Anlagefläche der Werkzeugspindel und der Aufnahmefläche des Spindelgehäuses angeordnet ist, so dass eine Abweichung der Werkzeugspindel, insbesondere eine Ist-Verkippung einer Längsachse der Spindel, gegenüber der Werkstückaufnahme zumindest teilweise kompensiert ist.

Auch auf diese Weise wird die Aufgabe der Erfindung vollständig gelöst.

Gemäß einer beispielhaften Ausführungsform weist die Werkzeugmaschine eine erste Spindel und eine zweite Spindel auf, die an einem gemeinsamen Spindelgehäuse aufgenommen und parallel zueinander ausgerichtet sind, wobei zumindest die erste Spindel oder die zweite Spindel über eine Justierscheibe mit einer Aufnahmefläche des Spindelgehäuses gekoppelt sind.

Eine solche Doppelspindelanordnung eignet sich für die parallele Bearbeitung zweier Werkstücke. Ferner können auf diese Weise unterschiedliche Bearbeitungsvorgänge durchgeführt werden, die unterschiedliche Parameter (Drehzahl, etc.) und/oder unterschiedliche Werkzeuge erfordern.

Ferner betrifft die vorliegende Offenbarung eine Verwendung eines Satzes von Justierscheiben zur Ausrichtung einer Spindel einer Werkzeugmaschine. Insbesondere wird der Satz von Justierscheiben in zumindest einer Ausgestaltung des offenbarungsgemäßen Verfahrens verwendet.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteile der Erfindung ergeben sich aus der nachfolgenden Beschreibung und Erläuterung mehrerer beispielhafter Ausführungsbeispiele unter Bezugnahme auf die Zeichnungen. Es zeigen:
- Fig. 1: eine perspektivische Ansicht einer beispielhaften Ausführungsform einer als Fräsmaschine gestalteten Werkzeugmaschine;
- Fig. 2: eine schematische Teilansicht einer Ausführungsform einer Werkzeugmaschine, umfassend eine als Doppelspindel gestaltete Spindeleinheit sowie eine Wiege als Werkzeugauflage;
- Fig. 3: eine perspektivische Teilansicht einer Spindeleinheit einer Werkzeugmaschine in einem teilweise explodierten Zustand;
- Fig. 4: eine vergrößerte Teilschnittansicht der Anordnung gemäß Fig. 3;
- Fig. 5: eine vereinfachte schematische Schnittansicht einer Ausführungsform einer Spindeleinheit mit einer fehlerbehafteten Spindelausrichtung;
- Fig. 6: eine stirnseitige vereinfachte Ansicht der in Fig. 5 veranschaulichten Spindel;
- Fig. 7: eine schematische Schnittansicht einer teilmontierten Spindeleinheit auf Basis der in Fig. 5 veranschaulichten Ausführungsform zur Veranschaulichung eines Satzes von Justierscheiben;
- Fig. 8: eine weitere schematische Schnittansicht auf Basis der in Fig. 5 veranschaulichten Ausführungsform zur Veranschaulichung eines ausgerichteten/justierten Zustands der Spindel;
- Fig. 9: eine stirnseitige vereinfachte Ansicht der in Fig. 8 veranschaulichten Spindel;
- Fig. 10: eine perspektivische Teilschnittansicht einer Ausführungsform einer Spindeleinheit mit einer Doppelspindelanordnung;
- Fig. 11: eine schematische stirnseitigen Ansicht einer weiteren Ausführungsform einer Spindeleinheit mit einer Doppelspindelanordnung
- Fig. 12: ein schematisches Blockdiagramm zur Veranschaulichung einer beispielhaften Ausführungsform eines Verfahrens zur Ausrichtung einer Spindel; und
- Fig. 13: ein schematisches Blockdiagramm zur Veranschaulichung einer beispielhaften Ausführungsform eines Verfahrens zur Ausrichtung einer Doppelspindel einer Werkzeugmaschine.

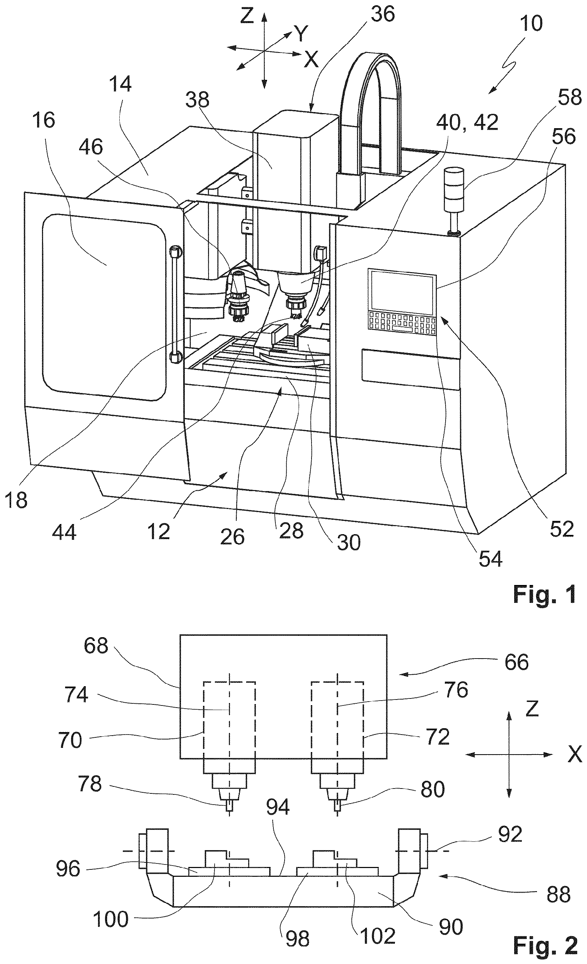

Fig. 1 veranschaulicht anhand einer perspektivischen Darstellung eine beispielhafte Ausführungsform einer insgesamt mit 10 bezeichneten Werkzeugmaschine. Beispielhaft ist die Werkzeugmaschine 10 als Fräsmaschine oder Fräszentrum ausgestaltet. Allgemein kann die Werkzeugmaschine 10 als kombinierte Dreh-/Fräsmaschine gestaltet sein. Die Werkzeugmaschine 10 ist zur Mehrachsbearbeitung ausgestaltet.

Die Werkzeugmaschine 10 wird lediglich stellvertretend für eine Vielzahl möglicher Ausführungsformen von Werkzeugmaschinen gezeigt.

Die Werkzeugmaschine 10 umfasst ein Gestell 12, das auch als Bett oder Fundament bezeichnet werden kann. Ferner ist eine mit 14 bezeichnete Einhausung vorgesehen. Über eine Schutztür 16 kann ein Prozessraum 18 der Werkzeugmaschine 10 zugänglich gemacht werden. Die Werkzeugmaschine 10 umfasst ferner eine Werkstückaufnahme 26, die auch als Werkstückauflage bezeichnet werden kann. Die Werkstückaufnahme 26 umfasst beispielhaft einen Tisch 28. Die Werkstückaufnahme 26 trägt im gezeigten Ausführungsbeispiel eine Werkstückhalterung 30, die auch als Aufspannung bezeichnet werden kann.

Die Werkzeugmaschine 10 umfasst eine Spindeleinheit 36. Die Spindeleinheit 36 weist eine Spindelgehäuse 38 auf, welches auch als Spindelkasten bezeichnet werden kann. Das Spindelgehäuse 38 trägt eine Motorspindel 40, die als Werkstückspindel 42 gestaltet ist. Die Spindel kann auch als Hauptspindel bezeichnet werden. An der Werkstückspindel 42 ist ein Werkzeug 44 aufgenommen, beispielhaft ein Werkzeug für Fräsbearbeitungen. Ferner weist die Werkzeugmaschine 10 beispielhaft zumindest ein Wechselwerkzeug 46 und entsprechende Einrichtungen zum Wechseln der Werkzeuge 44, 46 auf. Es versteht sich, dass die Werkzeugmaschine 10 weitere Handhabungseinrichtungen zum Werkstückwechsel, Werkzeugwechsel, für Messaufgaben und dergleichen umfassen kann. Die Motorspindel 40 kann allgemein auch als Spindel bezeichnet werden. Spindeln in Sinne der vorliegenden Offenbarung umfassen zumindest Motorspindeln und mit einem Motor koppelbare drehantreibbare Spindeln.

Es sind verschiedene Gestaltungsprinzipien für Werkzeugmaschinen bekannt. Beispielhaft kann die Werkzeugmaschine 10 als sogenannte Fahrständermaschine gestaltet sein. Ferner ist auch eine Gestaltung in Portalbauweise vorstellbar. Daneben ist auch die Gestaltung in Gantrybauweise bekannt. Weitere Gestaltungen sind vorstellbar.

Die in Fig. 1 lediglich beispielhaft veranschaulichte Werkzeugmaschine 10 ist dazu ausgestaltet und mit geeigneten Führungen und Antrieben versehen, um eine Bewegung der Spindeleinheit 36 mit der Motorspindel 40 und dem Werkzeug 44 in zumindest 3 Achsen (Raumrichtungen) X, Y, Z gegenüber einem Werkstück zu ermöglichen, das in der Werkstückhalterung 30 aufgenommen ist, vergleiche das in Fig. 1 gezeigte Koordinatensystem X-Y-Z. Es versteht sich, dass auch weitere Bearbeitungsachsen (insbesondere Schwenkachsen) vorstellbar sind.

Die Werkzeugmaschinen 10 weist ferner eine mit 52 bezeichnete Steuereinheit auf. Die Steuereinheit 52 umfasst beispielhaft Bedienelemente 54 und eine Anzeige 56. Ferner ist eine mit 58 bezeichnete Signaleinheit vorgesehen.

Die vorliegende Offenbarung befasst sich insbesondere mit der Ausrichtung von Motorspindeln bzw. Werkstückspindeln in Bezug auf das jeweilige Spindelgehäuse der Spindeleinheit. Eine hochgenaue Ausrichtung ist notwendig für ein gutes Bearbeitungsergebnis, insbesondere für eine hohe Genauigkeit und Maßhaltigkeit der Bearbeitung.

Dies gilt umso mehr bei Werkzeugmaschinen mit sogenannten Doppelspindelanordnungen. Fig. 2 veranschaulicht anhand einer schematischen Darstellung eine Gestaltung einer Spindeleinheit 66, die als Doppelspindel gestaltet ist. Die Spindeleinheit 66 weist eine Spindelgehäuse 68 auf, das auch als Spindelkasten bezeichnet werden kann. Das Spindelgehäuse 68 trägt eine erste Motorspindel 70 und eine zweite Motorspindel 72, die jeweils um ihre Längsachse 74, 76 antreibbar sind, um Werkzeuge 78, 80 anzutreiben.

Die beiden Motorspindeln 70, 72 bzw. deren Längsachsen 74, 76 sind vorzugsweise parallel zueinander ausgerichtet. Mit anderen Worten wird eine Zustand angestrebt, bei dem die Längsachsen 74, 76 möglichst hochgenau parallel zur Z-Achse angeordnet sind. Grundsätzlich gilt, dass die Motorspindeln 70, 72 möglichst rechtwinklig zur Werkstückauflage/Werkstückaufnahme 88 ausgerichtet sein sollen. Dies gilt zumindest für einen neutralen Zustand (Null-Lage) der Werkstückaufnahme 88.

In der in Fig. 2 veranschaulichten Ausführungsform ist die Werkstückaufnahme 88 als Wiege 90 gestaltet. Die Wiege 90 weist eine (angetriebene) Schwenkachse 92 auf. Die Schwenkachse 92 ist beispielsweise parallel zur X-Achse. Die Wiege 90 weist einen Tisch 94 auf, an dem Werkstückhalter 96, 98 angeordnet sind. Beispielhaft trägt jeder der Werkstückhalter 96, 98 ein Werkstück 100, 102, das durch eine der beiden Spindeln 70, 72 bearbeitet werden kann.

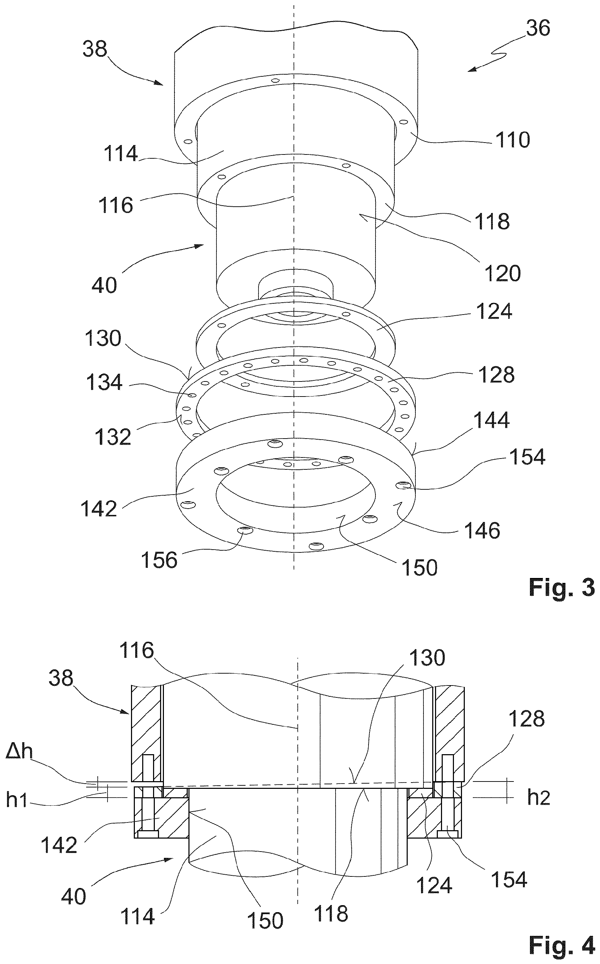

Mit Bezugnahme auf die Figuren 3-11 werden verschiedene Ansätze zur hochgenauen Positionierung und Ausrichtung von Motorspindeln für Werkzeugmaschinen veranschaulicht und näher erläutert.

Es versteht sich, dass die Ist-Abweichungen, insbesondere die Ist-Verkippungen, die in zumindest einigen der Figuren dargestellt sind, aus Veranschaulichungsgründen deutlich übertrieben sind. In der Praxis liegen die Abweichungen häufig bei weniger als 0,05°(Winkelgrad) - bis hin zu wen iger als 0,005°. Dies zeigt sich an den Keilstärken und Abstufungen der Justierscheiben. Eine Justierscheibe weist beispielhaft eine Keilstärke von 10 µm, 20 µm, oder 50 µm (Mikrometer) auf, bezogen auf einen Durchmesser von 250 mm (Millimeter). Dies verdeutlicht, dass die gezeigten Gestaltabweichungen aus Veranschaulichungsgründen stark übertrieben sind.

Fig. 3 und Fig. 4 veranschaulichen anhand von Teildarstellungen eine Montage/Befestigung einer Motorspindel 40 an einem Spindelgehäuse 38 einer Spindeleinheit 36. Die Motorspindel 40 und das Spindelgehäuse 38 bilden einen Bestandteil der Spindeleinheit 36. Die Motorspindel 40 ist zumindest teilweise im Spindelgehäuse 38 aufgenommen. Zu diesem Zweck ist am Spindelgehäuse 38 eine Aufnahmefläche 110 ausgebildet, die beispielhaft als Stirnfläche gestaltet ist. Die Motorspindel 40 weist einen Spindelkörper 114 auf. Ferner weist die Motorspindel 40 eine Längsachse 116 auf.

Die Ausrichtung der Motorspindel 40 erfolgt regelmäßig mit dem Ziel, diese Längsachse 116 bewusst rechtwinklig zu einer Werkstückauflage und/oder parallel zu einer weiteren Achse auszurichten. Am Spindelkörper 114 ist ferner ein Absatz ausgebildet, an dem eine Anlagefläche 118 ausgebildet ist. Die Anlagefläche 118 ist als Stirnfläche gestaltet. In dem Ausführungsbeispiel gemäß den Figuren 3 und 4 weisen die Anlagefläche 118 und die Aufnahmefläche 110 in die gleiche Richtung. Demgemäß gibt es keinen direkten Kontakt zwischen der Anlagefläche 118 und der Aufnahmefläche 110, wenn die Motorspindel 40 am Spindelgehäuse 38 befestigt wird. Stattdessen erfolgt in diesem Ausführungsbeispiel eine mittelbare Befestigung.

Die Anlagefläche 118 definiert eine Z-Lage der Motorspindel 40. Der Anlagefläche 118 ist eine Passfläche mit einem Passdurchmesser 120 benachbart. Der Passdurchmesser 120 definiert eine konzentrische Ausrichtung (z.B. in einer X-Y-Ebene) der Motorspindel 40. Zur Montage der Motorspindel 40 ist im Ausführungsbeispiel ein Abstimmring 124 vorgesehen. Der Abstimmring 124 kann bewusst gewählt werden, um eine Z-Lage der Motorspindel 40 in Bezug auf das Spindelgehäuse 38 zu verändern.

Ferner ist zur Montage der Motorspindel 40 eine Justierscheibe 128 vorgesehen. In dem Ausführungsbeispiel gemäß den Figuren 3 und 4 sind der Abstimmring 124 und die Justierscheibe 128 konzentrisch gestaltet und ausgerichtet. Demgemäß bildet die Justierscheibe 128 beispielhaft einen äußeren Ring, wobei der Abstimmring 124 einen inneren Ring bildet. Eine umgekehrte Zuordnung ist grundsätzlich auch vorstellbar.

Die Justierscheibe 128 weist Stirnflächen 130, 132 auf. Die Stirnfläche 130 ist dem Spindelgehäuse 38 zugewandt. Die Stirnfläche 132 ist vom Spindelgehäuse 38 abgewandt. Ferner weist die Justierscheibe 128 über ihren Umfang eine Teilung 134 in Form einer definierten Anzahl von Löchern/Ausnehmungen auf. Auf diese Weise kann eine definierte Drehorientierung der Justierscheibe 128 in Bezug auf das Spindelgehäuse 38 herbeigeführt werden.

Die Justierscheibe 128 kontaktiert im Ausführungsbeispiel zum einen die Aufnahmefläche 110 des Spindelgehäuses 38. Zum anderen kontaktiert die Justierscheibe 128 eine Montageplatte 142. Im Ausführungsbeispiel ist auch die Montageplatte 142 ringartig gestaltet. Die Montageplatte 142 kann auch als Motorplatte bezeichnet werden. Die Montageplatte 142 weist eine Stirnfläche 144 und eine Stirnfläche 146 auf. Die Stirnfläche 144 ist im montierten Zustand der Aufnahmefläche 110 des Spindelgehäuses 38 bzw. der Anlagefläche 118 der Motorspindel 40 zugewandt. Die Stirnfläche 146 ist hiervon abgewandt. Ferner weist die Motorspindel 40 an ihrem Innendurchmesser einen Pass-Sitz 150 auf, der an den Passdurchmesser 120 des Spindelkörpers 114 angepasst ist. Demgemäß kann die Montageplatte 142 auf den Spindelkörper114 aufgestülpt werden.

Die Montageplatte 142 weist ferner Ausnehmungen 154, 156 zur Befestigung und Verbindung von Spindelgehäuse 38, Motorspindel 40, Justierscheibe 128, Abstimmring 124 und Montageplatte 142 auf. Ausnehmungen 154 sind der Justierscheibe 128 zugeordnet, dort sind entsprechende Gegenelemente (Teilung 134) vorgesehen. Ausnehmungen 156 sind dem Abstimmring 124 zugeordnet, dort sind entsprechende Gegenelemente vorgesehen. Befestigungselemente (Schrauben, Bolzen, Stifte) sind in Fig. 3 und Fig. 4 nicht dargestellt.

Im montierten Zustand kontaktiert die Justierscheibe 128 mit ihrer Stirnfläche 132 die Montageplatte 142. Die Justierscheibe 128 kontaktiert mit ihrer Stirnfläche 130 die Aufnahmefläche 110 des Spindelgehäuses 38. Ferner ist im montierten Zustand zwischen der Anlagefläche 118 des Spindelkörpers 114 und der Stirnfläche 144 der Montageplatte 142 der Abstimmring 124 vorgesehen. Sofern keine Abstimmmöglichkeit in Z-Richtung gewünscht ist, kann auf den Abstimmring 124 verzichtet werden. In einem solchen Zustand könnte die Stirnfläche 144 der Montageplatte 142 direkt die Anlagefläche 118 kontaktieren.

Es ist grundsätzlich auch vorstellbar, die Montageplatte 142 integral mit dem Spindelkörper 114 auszuführen. In einem solchen Fall sind Ausführungsformen vorstellbar, bei denen die Justierscheibe 128 direkt zwischen der Motorspindel 40 und dem Spindelgehäuse 38 angeordnet ist. Demgemäß wäre in einem solchen Fall die Anlagefläche 118 der Aufnahmefläche 110 zugewandt.

Fig. 4 veranschaulicht einen (nicht vollständig) gefügten Zustand der Spindeleinheit 36. Durch Randdicken h1, h2 wird die Keilform der Justierscheibe 128 im Querschnitt veranschaulicht. Ferner veranschaulicht die "Lücke" Δh die Keilstärke. Es gilt Δh = h1 - h2. Wenn also die Montageplatte 142 und folglich die Justierscheibe 128 fest mit dem Spindelgehäuse 38 verbunden ist, so würde sich eine Verkippung zwischen der Motorspindel 40 (bzw. deren Längsachse 116) und dem Spindelgehäuse 38 ergeben. Diese Verkippung wird nun genutzt, um die Motorspindel 40 im Falle von Lageabweichungen in gewünschter Weise auszurichten.

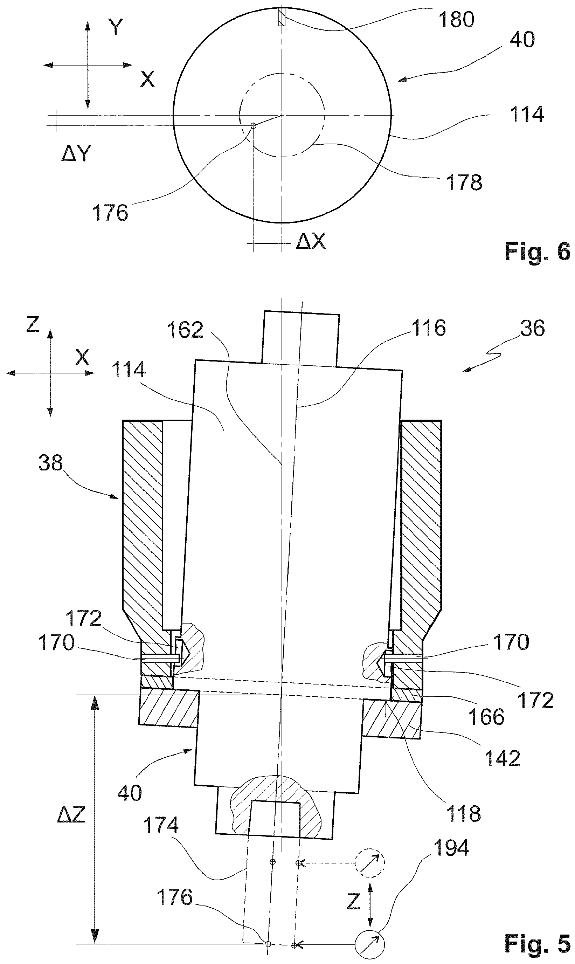

Ein solcher Ausrichtvorgang wird anhand der schematischen, vereinfachten Darstellungen der Figuren 5-9 veranschaulicht. Fig. 5 veranschaulicht eine teilweise geschnittene Seitenansicht einer Spindeleinheit 36 mit einer Motorspindel 40, die an einem Spindelgehäuse 38 aufgenommen ist. Aufgrund von Fertigungsfehlern, Montagefehlern und/oder sonstigen Fehlereinflüssen ist die Spindel 40 mit ihrer Längsachse 116 gegenüber einer Soll-Ausrichtung (Längsachse 162, die eine ideale Ausrichtung veranschaulicht) verkippt. Die ideale Längsachse 162 kann beispielsweise die Längsrichtung einer Z-Führung für die Motorspindel 40 oder für eine Werkstückaufnahme beschreiben. Insofern kann diese ideale Längsachse 162 den Bezug für die Ausrichtung der Motorspindel 40 liefern.

In Fig. 5 ist die Motorspindel 40 über eine Montageplatte 142 unter Zwischenschaltung eines Parallelrings 166 (planparalleler Ring) mit einer Stirnfläche des Spindelgehäuses 38 gekoppelt. Es wird vorgeschlagen, den Parallelring 166 durch eine geeignete Justierscheibe zu ersetzen, die in geeigneter Drehorientierung zu montieren ist. Auf diese Weise kann der Verkippung entgegengewirkt werden, so dass die Längsachse 116 der Motorspindel 40 möglichst vollständig mit der Soll-Längsachse 162 (beispielsweise Längsrichtung einer Z-Führung) zusammenfällt.

Fig. 5 veranschaulicht ferner eine Lagesicherung für die Motorspindel 40 am Spindelgehäuse 38. Dies erfolgt beispielsweise über Lagesicherungselemente 170, die in Ausnehmungen 172 eingreifen. Beispielhaft sind die Ausnehmungen 172 am Spindelkörper 114 vorgesehen. Demgemäß sind die Lagesicherungselemente 170 am Spindelgehäuse 38 aufgenommen. Diese Art der Lagesicherung dient jedoch nicht primär zur Ausrichtung der Motorspindel gegenüber dem Spindelgehäuse.

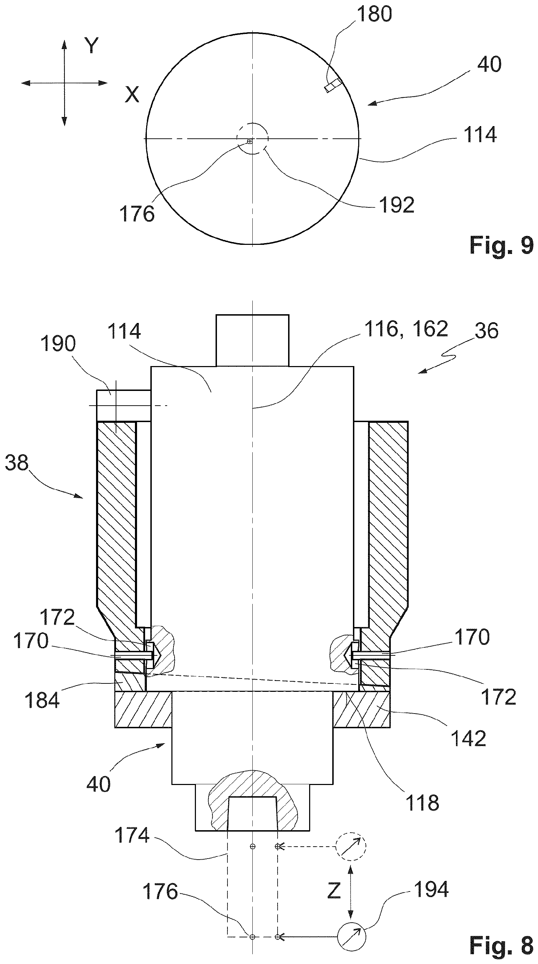

Zur Auswahl einer geeigneten Justierscheibe ist es zunächst erforderlich, die tatsächliche Abweichung (Ist-Abweichung) zu erfassen. Dies kann beispielsweise erfolgen, indem die Lage eines Referenzpunktes 176 bestimmt wird. Zu diesem Zweck ist es vorstellbar, einen Messdorn 174 oder ein ähnliches Hilfsmittel an der Werkzeugaufnahme der Motorspindel 40 aufzunehmen und in einer definierten Z-Position (ΔZ) bei der Relativbewegung der Motorspindel 40 zur Messeinrichtung Lageabweichungen eines Referenzpunktes 176 (am Umfang des Messdorns 174) mit geeigneten Messinstrumenten 194 zu erfassen. In Fig. 5 und Fig. 8 ist jeweils eine Relativbewegung zwischen dem Messdorn 174 und dem Messinstrument 194 in der Z-Richtung angedeutet.

Dies kann beispielsweise eine Messung in X und Y umfassen, wobei die Spindel 40 jeweils relativ zur Messeinrichtung (in der Z-Richtung) verfahren wird, um den Gesamtfehler zu erfassen. Sodann kann für die Position ΔZ eine Abweichung des Referenzpunktes 176 in der X-Richtung (ΔX) und der Y-Richtung (ΔY) bestimmt werden, vergleiche hierzu Fig. 6.

Der Messung liegt das Ziel zugrunde, einen Vektor der Verkippung bzw. Lageabweichung zu erfassen, wobei die Lageabweichung vorzugsweise durch wenige und leicht verständliche Werte, wie Abweichungen in der X-Richtung (ΔX) und der Y-Richtung (ΔY), beschreibbar ist. Sofern definiert und bekannt ist, in welcher Z-Position (ΔY) die Messung des Referenzpunktes erfolgt, genügt diese Angabe.

Fig. 6 veranschaulicht in diesem Zusammenhang die projizierten Teil-Abweichungen in X und Y. Der Maßstab der Darstellung in Fig. 6 weicht vom Maßstab der Darstellung in Fig. 5 ab. In Fig. 6 ist ferner durch eine mit 178 bezeichnete Linie ein Kreis angedeutet, der auch als Toleranzkreis bezeichnet werden kann. Der Toleranzkreis 178 stellt gewissermaßen denjenigen Fehler dar, den eine bestimmte Justierscheibe bei entsprechender Drehausrichtung kompensieren kann. Idealerweise wird die Justierscheibe so gewählt, dass der tatsächliche Fehler des Referenzpunktes 176 (Ist-Fehler) auf oder nahe bei dem Toleranzkreis 178 liegt. Ferner ist in Fig. 6 mit 180 ein Marker/Indikator für die Drehlage angedeutet. Der Indikator 180 ist wichtig für die korrekte Drehorientierung der ausgewählten Justierscheibe. Wenn nämlich die Justierscheibe beispielsweise um 180°verdreht, also genau verkehrt herum montiert wurde, so könnte sich der Fehler gegebenenfalls sogar verdoppeln.

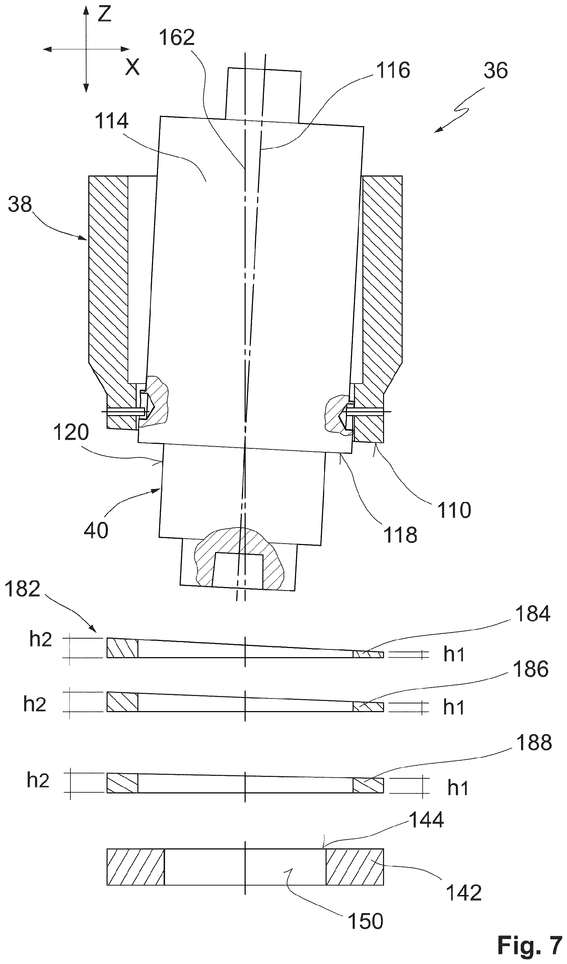

Fig. 7 veranschaulicht den Zustand gemäß Fig. 5, wobei die Montageplatte 142 und auch der Parallelring 166 von der Motorspindel 40 bzw. vom Spindelgehäuse 38 gelöst sind. In Kenntnis des Ist-Fehlers des Referenzpunktes 176 kann nun aus einem Satz 182 von Justierscheiben 184, 186, 188 ein geeignetes Exemplar ausgewählt werden, um den Ist-Fehler zu kompensieren.

Die Justierscheiben 184, 186, 188 des Satzes 182 sind abgestuft und mit verschiedenen Keilstärken (Δh = h2 - h1) versehen. Die jeweils ausgewählte Justierscheibe kann sodann zwischen der Aufnahmefläche 110 des Spindelgehäuses 38 und der Montageplatte 142 aufgenommen werden. Ferner kann die Montageplatte 142 mit ihrer Stirnfläche 144 neben der gewählten Justierscheibe in der Ausführungsform gemäß den Figuren 5-9 auch die Anlagefläche 118 des Spindelkörpers 114 kontaktieren. Daneben sitzt die Montageplatte 142 über ihren Pass-Sitz 150 auf dem Passdurchmesser 120 des Spindelkörpers 114.

Ein Zustand nach Auswahl einer Justierscheibe 184 und Montage der Justierscheibe 184 zwischen dem Spindelgehäuse 38 und der Montageplatte 142 zur Aufnahme der Spindel 40 am Spindelgehäuse 38 wird in den Figuren 8 und 9 veranschaulicht. Die Justierscheibe 184 wurde in geeigneter Drehorientierung montiert, so dass sich die gewünschte Soll-Lage für die Längsachse 116 der Motorspindel 40 ergibt. Die Längsachse 116 fällt mit der (idealen) Längsachse 162 zusammen, wobei minimale Restabweichungen gegeben sein können.

Der Referenzpunkt 176 liegt nunmehr ebenso nahe bei oder sogar auf der idealen Längsachse 162. Folglich wurde der Kippfehler (beispielsweise zwischen der Längsachse 116 der Motorspindel und einer Längsrichtung der Z-Führung) deutlich reduziert. Fig. 9 zeigt im Vergleich zu Fig. 6, dass bei geeigneter Auswahl und Orientierung der Justierscheibe 184 die Motorspindel 40 bzw. deren Spindelkörper 114 derart ausgerichtet werden können, dass der Referenzpunkt 176 nunmehr nahe im Zentrum liegt. Aus dem recht großen Toleranzkreis 178 in Fig. 6 wurde durch die Montage der Justierscheibe 184 ein deutlich kleinerer (akzeptabler) Toleranzkreis 192 in Fig. 9. Es konnte eine deutliche Verbesserung der Positioniergenauigkeit erreicht werden. In Fig. 9 und Fig. 6 sind aus Veranschaulichungsgründen Justierscheiben bzw. Parallelringe nicht separat dargestellt. Fig. 9 zeigt ferner, dass die Justierscheibe 184 in einer bestimmten Drehlage (vergleiche den Indikator 180) montiert wurde, und zwar gegenüber der bzw. diametral zur Richtung des Referenzpunktes 176 (Ist-Fehler). Auf diese Weise kann die Justierscheibe 184 dem Fehler entgegenwirken.

Ergänzend veranschaulicht Fig. 8 durch ein mit 190 bezeichnetes Element eine radiale Sicherung 190 für die Motorspindel 40 bzw. deren Spindelkörper 114 am bzw. im Spindelgehäuse 38. Die radiale Sicherung 190 versteift die Spindel in ihrer Soll-Lage und Soll-Orientierung. Die radiale Sicherung 190 ist vorzugsweise deutlich vom tischseitigen Ende der Motorspindel 40 beabstandet. In diesem Bereich wird nämlich die Motorspindel 40 bereits durch die Montageplatte 142 und die Justierscheibe 184 am Spindelgehäuse 38 fixiert.

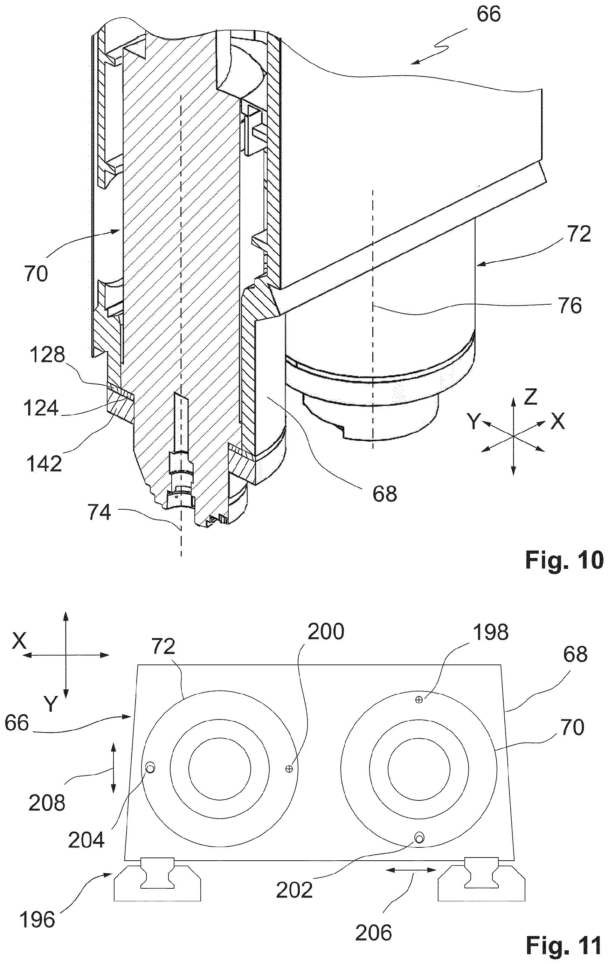

Fig. 10 veranschaulicht eine perspektivische teilweise geschnittene Teildarstellung einer Spindeleinheit 66, die als Doppelspindel gestaltet ist (vergleiche auch Fig. 2). Die Spindeleinheit 66 weist ein Spindelgehäuse 68 auf, welches Aufnahmen für zwei Motorspindeln 70, 72 bereitstellt, die jeweils um ihre Längsachsen 74, 76 rotierbar sind. Ein Auslegungsziel für die Ausrichtung der Längsachsen 74, 76 ist einerseits die Rechtwinkligkeit zu einer Werkstückauflage bzw. einem Tisch. Ferner kann jedoch auch die Parallelität zwischen den beiden Längsachsen 74, 76 ein Auslegungsziel darstellen. Ferner kann jedoch auch die Parallelität zwischen jeder der beiden Längsachsen 74, 76 und der Z-Richtung - also etwa einer Verfahrachse für die Z-Richtung - ein Auslegungsziel darstellen.

Auch die Spindel 70 ist über eine Montageplatte 142 am Spindelgehäuse 68 aufgenommen. Zwischen Montageplatte 142, Spindelgehäuse 68 und einer Anlagefläche der Spindel 70 ist in grundsätzlich zuvor schon beschriebener Weise eine Justierscheibe 128 und ferner optional (zumindest in beispielhaften Ausgestaltungen) ein Abstimmring 124 angeordnet. Die weitere Spindel 72 ist in ähnlicher Weise am Spindelgehäuse 68 aufgenommen.

Ergänzend wird auf Fig. 11 Bezug genommen, die eine vereinfachte schematische frontale Ansicht einer Spindeleinheit 66 mit Doppelspindel (Motorspindeln 70, 72) aufweist, vergleiche hierzu auch Fig. 2 und Fig. 10. Die Spindeln 70, 72 sind an einem Spindelgehäuse 68 aufgenommen. Die Spindeleinheit 66 ist über ihr Spindelgehäuse 68 an einer Z-Führung 196 verfahrbar aufgenommen.

Fig. 11 veranschaulicht Verstellmöglichkeiten für die X-Position und die Y-Position der Motorspindeln 70, 72. Die Motorspindel 70 weist ein Schwenklager 198 auf. Die Motorspindel 72 weist ein Schwenklager 200 auf. Die Schwenklager 198, 200 sind jeweils im Umfangsbereich der Motorspindeln 70, 72 angeordnet und am Spindelgehäuse 68 ortsfest aufgenommen. Ferner ist der jeweiligen Motorspindel 70, 72 ein Stellelement 202, 204 zugeordnet. Bei der Motorspindel 70 ist ein Stellelement 202 vorgesehen, welches dem Schwenklager 198 gegenüberliegt. Bei der Motorspindel 72 ist ein Stellelement 204 vorgesehen, welches dem Schwenklager 200 gegenüberliegt.

Die Anordnung des Schwenklagers 198 und des Stellelements 202 erlaubt minimale Schwenkbewegungen der Motorspindel 70 um das Schwenklager 198. Auf diese Weise sind kleine Verstellbewegungen in der X-Richtung möglich, vergleiche den Doppelpfeil 206. Die Anordnung des Schwenklagers 200 und des Stellelements 204 erlaubt minimale Schwenkbewegungen der Motorspindel 72 um das Schwenklager 200. Auf diese Weise sind kleine Verstellbewegungen in der Y-Richtung möglich, vergleiche den Doppelpfeil 208.

Die Stellelemente 202, 204 können mit Exzentern versehen sein, die in entsprechenden Führungen (z.B. Langlöchern) angeordnet sind, um bei einer Drehbewegung aufgrund der Exzentrizität kleine Verstellbewegungen auslösen zu können. Nach erfolgter Einstellung können die Stellelemente 202, 204 (oder Spindelkörper der Motorspindeln 70, 72) fixiert werden, um die Ist-Lage der Motorspindeln 70, 72 zu sichern.

Es versteht sich, dass auch eine Anordnung mit einer einzigen Motorspindel in ähnlicher Weise mit zumindest einem Stellelement versehen sein kann, um Verstellbewegungen in zumindest der X-Richtung und/oder der Y-Richtung zu ermöglichen. Eine Gleichausrichtung zweier Motorspindeln 70, 72 ist bei Spindeleinheiten 66, die als Doppelspindel Anordnung gestaltet sind, von hoher Bedeutung. Diese Art der Ausrichtung kann ein definierten Abstand (in X-Richtung) zwischen den beiden Motorspindeln 70, 72 betreffen. Ferner kann ein Ziel der Ausrichtung die Positionierung beider Motorspindeln 70, 72 in der gleichen Y-Lage betreffen.

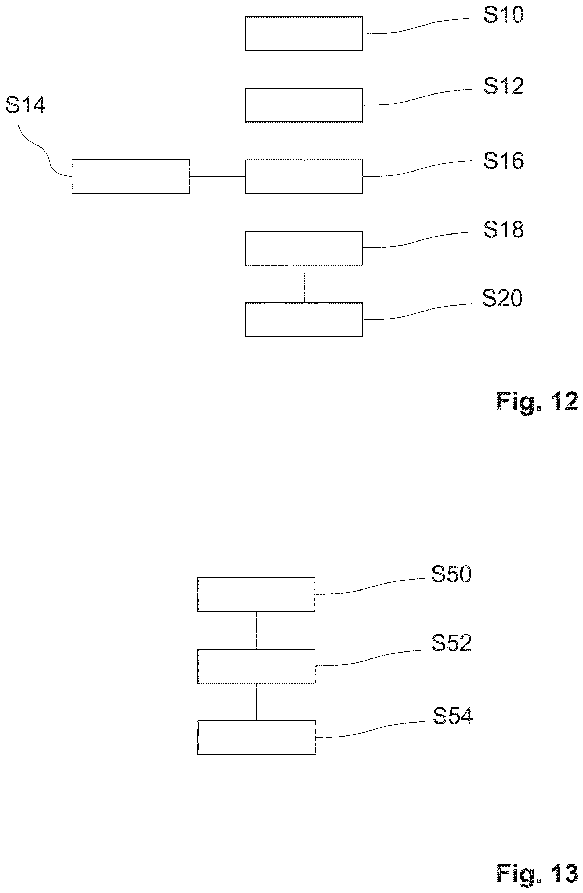

Mit Bezugnahme auf Fig. 12 wird anhand eines vereinfachten schematischen Blockdiagramms ein Ausführungsbeispiel eines Verfahrens zur Ausrichtung einer Motorspindel einer Werkzeugmaschine veranschaulicht und näher erläutert.

Das Verfahren umfasst einen Schritt S10, der eine Vormontage oder Probemontage einer Motorspindel an einem zur Aufnahme der Motorspindel ausgebildeten Spindelgehäuse umfasst. Zu diesem Zweck wird die Motorspindel mittelbar oder unmittelbar an einer Aufnahmefläche des Spindelgehäuses befestigt, zumindest temporär. Die Vormontage kann ein Zwischenschalten von Abstandshaltern (Parallelringen) umfassen.

Es schließt sich ein Schritt S12 an, der die Erfassung/Ermittlung einer Ist-Abweichung der Motorspindel beinhaltet. Insbesondere geht es darum, eine Verkippung einer Längsachse der Motorspindel gegenüber einer idealen Soll-Lage zu bestimmen. Die Soll-Lage kann eine gewünschte Rechtwinkligkeit gegenüber einem Tisch zur Aufnahme von Werkstücken sein. Ferner kann die Soll-Lage eine gewünschte Parallelität in Bezug auf eine weitere Längsachse (etwa einer weiteren Spindel) sein. Ferner kann die Soll-Lage eine gewünschte Parallelität in Bezug auf eine Führung der Werkzeugmaschine sein, etwa in Bezug auf eine Z-Führung. Beispielhaft ist es vorstellbar, ein Hilfsmittel in Form eines Messdorns oder dergleichen an der Motorspindel aufzunehmen. Sodann wird die Motorspindel relativ zur Messeinrichtung entlang einer Achse, etwa der Z-Achse, verfahren. Über geeignete Messinstrumente kann die Verkippung der Spindel erfasst werden. Die Messstelle kann in der Z-Richtung von der Aufnahme des Messdorns beabstandet sein, so dass etwaige Lagefehler deutlicher wahrnehmbar sind.

Es ist vorstellbar, Auslenkungen des Messdorns in unterschiedlichen Raumrichtungen (X-Richtung, Y-Richtung) zu erfassen. Auf diese Weise kann in Kenntnis der Z-Position eine Gesamtabweichung ermittelt werden, die einen gegebenen Vektor der Längsachse der Motorspindel (in Bezug auf die Soll-Lage) beschreibt. Idealerweise ergibt die Ermittlung der Ist-Abweichung zwei einfach handhabbare Werte (zum Beispiel Abweichung eines Referenzpunktes in der X-Richtung und in der Y-Richtung).

Das Verfahren umfasst einen weiteren Schritt S14, der die Bereitstellung eines Satzes an Justierscheiben beinhaltet. Der Satz umfasst eine Mehrzahl von Justierscheiben. Die Justierscheiben weisen eine Keilgestalt auf. Vorzugsweise unterscheiden sich zumindest einige der Justierscheiben des Satzes in ihrer Keilstärke. Beispielhaft kann die Keilstärke der Justierscheiben in einem Bereich von 5 µm bis 100 µm liegen, bezogen auf einen Außendurchmesser von etwa 200 mm bis 300 mm. Eine Abstufung (Inkrement) der Keilstärke kann etwa 5 µm bis 20 µm betragen. Es versteht sich, dass auch Justierscheiben mit abweichenden Absolutmaßen infrage kommen, wobei auf Basis der obigen Wertepaare entsprechende Keilwinkel hergeleitet werden können, die sich in entsprechend angepassten Keilstärken niederschlagen.

Anders gesagt kann die Keilgestalt ein Keilverhältnis (Durchmesser zu Keilstärke) aufweisen, das etwa in einem Bereich von 2.000 zu 1 bis 100.000 zu 1 liegt. Alternativ kann die Keilgestalt ein Keilverhältnis (Durchmesser zu Keilstärke) aufweisen, das etwa in einem Bereich von 10.000 zu 1 bis 60.000 zu 1 liegt. Alternativ kann die Keilgestalt ein Keilverhältnis (Durchmesser zu Keilstärke) aufweisen, das etwa in einem Bereich von 20.000 zu 1 bis 30.000 zu 1 liegt. Alternativ kann die Keilgestalt ein Keilverhältnis (Durchmesser zu Keilstärke) aufweisen, das etwa bei 25.000 zu 1 liegt. Die so definierte Keilgestalt einspricht einem Keilwinkel, welcher ebenso über das Verhältnis angegeben werden kann. Durch Kombination mehrerer Justierscheiben können andere Bereiche abgedeckt werden. Auch die Abstufung/das Inkrement zwischen der Stärke mehrerer Justierscheiben kann in ähnlichen Bereichen liegen.

Es folgt ein Schritt S16, der die Auswahl einer geeigneten Justierscheibe aus dem Satz von Justierscheiben betrifft. Auf Basis der im Schritt S12 ermittelten Ist-Abweichung kann in einfacher Weise auf Basis eines Algorithmus rechentechnisch oder durch ein Diagramm/Schaubild die am besten geeignete Justierscheibe sowie deren Drehlage ermittelt werden. Die Drehlage ist von Bedeutung, damit die keilförmige Justierscheibe in einer Drehlage positioniert wird, in der sie der Ist-Abweichung optimal entgegenwirkt.

Nach Auswahl der geeigneten Justierscheibe wird diese in einem weiteren Schritt S18 in der definierten Drehlage mittelbar oder unmittelbar zwischen der Motorspindel und dem Spindelgehäuse montiert. Auf diese Weise kann die Ist-Abweichung deutlich reduziert werden. Beispielhaft kann die Justierscheibe mittelbar oder unmittelbar mit einer Anlagefläche der Motorspindel und einer Aufnahmefläche des Spindelgehäuses gekoppelt werden. Die Justierscheibe induziert einen bewussten Fehler, der den Fehler, der die Ist-Abweichung zuvor bedingt hat, teilweise kompensiert.

An den Schritt S18 schließt sich ein Schritt S20 an, der die Fertigmontage der Motorspindel am Spindelgehäuse umfasst. Dies kann eine Lagesicherung für die Motorspindel beinhalten, um diese in der gewünschten Orientierung sicher und dauerhaft mit dem Spindelgehäuse zu verbinden. Der Schritt S20 kann auch weitere Einstellarbeiten oder Justagearbeiten umfassen, etwa eine Ausrichtung der Motorspindel in Richtungen quer zur Längsachse (X-Richtung und/oder Y-Richtung) und/oder eine Ausrichtung der Motorspindel entlang der Längsachse (Z-Richtung).

Mit Bezugnahme auf Fig. 13 wird anhand eines vereinfachten schematischen Blockdiagramms ein Ausführungsbeispiel eines Verfahrens zur Ausrichtung einer Werkzeugmaschine mit einer Doppelspindelanordnung veranschaulicht und näher erläutert.

Das Verfahren umfasst einen ersten Schritt S50, der die Bereitstellung einer Spindelanordnung umfasst, die als Doppelspindel gestaltet ist. Demgemäß weist die Spindelanordnung ein Spindelgehäuse bzw. einen Spindelkasten auf, in dem Aufnahmen für zwei Motorspindeln vorgesehen sind. Der Schritt S50 umfasst auch die Bereitstellung zweier derartiger Motorspindeln. Es kann sich um Motorspindeln desselben Typs handeln. Die Motorspindeln in können aber auch unterschiedlich gestaltet sein. Gleichartige Motorspindeln werden üblicherweise für parallele Bearbeitungen verwendet, wenn es darum geht, die Leistungsfähigkeit der Werkzeugmaschine zu erhöhen. Unterschiedliche Motorspindeln können etwa dann verwendet werden, wenn eine Werkzeugmaschine bereitgestellt werden soll, die verschiedene Arbeitsgänge (etwa mit verschiedenen Drehzahlniveaus für unterschiedliche Werkzeuge) ermöglichen soll.

In einem weiteren Schritt S52 erfolgt eine Ausrichtung einer ersten der beiden Motorspindeln. Die Ausrichtung kann eine Ausrichtung der Längsachse der Motorspindel in Bezug auf einen Tisch bzw. eine Werkstückaufspannung/Werkstückauflage umfassen. Vorzugsweise nutzt die Ausrichtung zumindest einige der Schritte S10 bis S20 des anhand der Fig. 12 veranschaulichten Verfahrens.

Es schließt sich ein weiterer Schritt S54 an, der eine Ausrichtung der zweiten der beiden Motorspindeln umfasst. Die Ausrichtung kann eine Ausrichtung der Längsachse der zweiten Motorspindel in Bezug auf die Längsachse der ersten Motorspindel umfassen. Vorzugsweise nutzt die Ausrichtung zumindest einige der Schritte S10 bis S20 des anhand der Fig. 12 veranschaulichten Verfahrens.

## Patentansprüche

1. Verfahren zur Ausrichtung einer Spindel (40; 70, 72) einer Werkzeugmaschine (10), insbesondere zum Ausrichten einer Werkzeugspindel (42), mit den folgenden Schritten:
- Probemontage der Spindel (40; 70, 72) an einem Spindelgehäuse (38; 68), umfassend mittelbare oder unmittelbare Befestigung einer Anlagefläche (118) der Spindel (40; 70, 72) an einer Aufnahmefläche (110) des Spindelgehäuses (38; 68),
- Ermitteln einer Ist-Abweichung der Spindel (40; 70, 72), insbesondere einer Ist-Verkippung einer Längsachse (74, 76; 116) der Spindel (40; 70, 72),
- Auswahl einer Justierscheibe (128; 164, 186, 188) in Abhängigkeit von der ermittelten Ist-Abweichung, wobei die Justierscheibe (128; 164, 186, 188) keilförmig gestaltet ist, und
- Anordnen der Justierscheibe (128; 164, 186, 188) zwischen der Anlagefläche (118) der Spindel (40; 70, 72) und der Aufnahmefläche (110) des Spindelgehäuses (38; 68) in einer Drehorientierung, die die Ist-Abweichung zumindest teilweise korrigiert.

2. Verfahren nach Anspruch 1, ferner aufweisend die folgenden Schritte:
- Bereitstellung eines Satzes (182) mit einer Mehrzahl von Justierscheiben (128; 164, 186, 188) mit unterschiedlichen Keilstärken,
- Auswahl derjenigen Justierscheibe (128; 164, 186, 188) für die Korrektur, deren Keilstärke der ermittelten Ist-Abweichung zumindest näherungsweise entspricht.

3. Verfahren nach Anspruch 2, umfassend die Bereitstellung eines Satzes (182) mit zumindest drei Justierscheiben (128; 164, 186, 188) mit unterschiedlichen Keilstärken.

4. Verfahren nach Anspruch 3, wobei die Keilstärken der Justierscheiben (128; 164, 186, 188) des Satzes (182), bezogen auf einen Außendurchmesser der Justierscheiben (128; 164, 186, 188), um einen Wert von 5 µm bis 20 µm zueinander abgestuft sind.

5. Verfahren nach einem der Ansprüche 2 bis 4, wobei die Keilstärke einer Justierscheibe (128; 164, 186, 188), bezogen auf einen Außendurchmesser der Justierscheiben (128; 164, 186, 188), gegenüber einer planparallelen Scheibe (166) in einem Bereich zwischen 5 µm und 100 µm liegt.

6. Verfahren nach einem der Ansprüche 1 bis 5, wobei eine Mehrzahl definierter Drehlagen für die Justierscheibe (128; 164, 186, 188) zwischen der Anlagefläche (118) der Spindel (40; 70, 72) und der Aufnahmefläche (110) des Spindelgehäuses (38; 68) vorgesehen ist.

7. Verfahren nach einem der Ansprüche 1 bis 6, wobei die Keilscheibe derart montiert wird, dass der auf die Keilgestalt der Justierscheibe (128; 164, 186, 188) zurückzuführende Fehler der Ist-Abweichung der Spindel (40; 70, 72) entgegengerichtet ist.

8. Verfahren nach einem der Ansprüche 1 bis 7, wobei die Ermittlung der Ist-Abweichung eine Erfassung einer Abweichung eines Referenzpunktes (176) in zwei Raumrichtungen in einer von der Anlagefläche (118) der Spindel (40; 70, 72) und der Aufnahmefläche (110) des Spindelgehäuses (38; 68) beabstandeten Ebene umfasst, die senkrecht zur Längsachse (74, 76; 116) der Spindel (40; 70, 72) orientiert ist.

9. Verfahren nach einem der Ansprüche 1 bis 7, wobei die Ermittlung der Ist-Abweichung eine Erfassung einer Ist-Winkelabweichung und einer Ist-Drehlage der Ist-Winkelabweichung der Spindel (40; 70, 72) umfasst.

10. Verfahren nach einem der Ansprüche 1 bis 9, wobei die Spindel (40; 70, 72) über eine Montageplatte (142) am Spindelgehäuse (38; 68) befestigt wird, wobei die Montageplatte (142) mit der Aufnahmefläche (110) des Spindelgehäuses (38; 68) und der Anlagefläche (118) der Spindel (40; 70, 72) verbunden wird.

11. Verfahren zur Ausrichtung einer Doppelspindel (66) einer Werkzeugmaschine (10), die eine erste Spindel (70) und eine zweite Spindel (72) aufweist, die in einem gemeinsamen Spindelgehäuse (38; 68) angeordnet sind, mit den folgenden Schritten:
- Ausrichtung der ersten Spindel (70) gemäß dem Verfahren nach einem der Ansprüche 1 bis 10, wobei die Ausrichtung gegenüber einer Werkstückaufnahme (26; 88) oder einer Verfahrachse (Z) erfolgt, und
- Ausrichtung der zweiten Spindel (72) gemäß dem Verfahren nach einem der Ansprüche 1 bis 10, wobei die Ausrichtung gegenüber der ersten Spindel (70) erfolgt, um eine gewünschte Parallelität zwischen den beiden Spindeln (70, 72) zu erreichen.

12. Verfahren nach Anspruch 11, ferner aufweisend den folgenden Schritt:
- Ausrichtung der ersten Spindel (70) und der zweiten Spindel (72) in einer Ebene senkrecht zur Spindelachse (74, 76),
wobei der ersten Spindel (70) und dem Spindelgehäuse (38; 68) ein erstes Stellelement (202), insbesondere ein erster Exzenter, zugeordnet ist,
wobei der zweiten Spindel (72) und dem Spindelgehäuse (38; 68) ein zweites Stellelement (204), insbesondere ein zweiter Exzenter, zugeordnet ist,
wobei das erste Stellelement (202) zu einer Verschiebung der ersten Spindel (70) relativ zum Spindelgehäuse (38; 68) in einer ersten Richtung ausgebildet ist,
wobei das zweite Stellelement (204) zu einer Verschiebung der zweiten Spindel (72) relativ zum Spindelgehäuse (38; 68) in einer zweiten Richtung ausgebildet ist, und
wobei die erste Richtung und die zweite Richtung schräg zueinander orientiert sind, vorzugsweise senkrecht zueinander.

13. Werkzeugmaschine (10), insbesondere Mehrachs-Fräsmaschine, die Folgendes aufweist:
- ein Gestell (12),
- eine Werkstückaufnahme (26; 88) zur Aufnahme zumindest eines Werkstücks, und
- einem Spindelgehäuse (38; 68), das zumindest eine als Spindel (40; 70, 72) gestaltete Werkzeugspindel (42) zur Aufnahme zumindest eines Werkzeugs (44) trägt, die um ihre Längsachse (74, 76; 116) antreibbar ist,
wobei zwischen der Werkstückaufnahme (26; 88) und der zumindest einen Spindel (40; 70, 72) Relativbewegungen erzeugbar sind, und
wobei die Spindel (40; 70, 72) über eine Justierscheibe (128; 164, 186, 188) mit einer Aufnahmefläche (110) des Spindelgehäuses (38; 68) gekoppelt ist, die keilförmig gestaltet und in einer Drehorientierung zwischen der Anlagefläche (118) der Spindel (40; 70, 72) und der Aufnahmefläche (110) des Spindelgehäuses (38; 68) angeordnet ist, so dass eine Abweichung der Spindel (40; 70, 72), insbesondere eine Ist-Verkippung einer Längsachse (74, 76; 116) der Spindel (40; 70, 72), gegenüber der Werkstückaufnahme (26; 88) zumindest teilweise kompensiert ist.

14. Werkzeugmaschine (10) nach Anspruch 13, mit einer ersten Spindel (70) und einer zweiten Spindel (72), die an einem gemeinsamen Spindelgehäuse (38; 68) aufgenommen und parallel zueinander ausgerichtet sind, wobei zumindest die erste Spindel (70) oder die zweite Spindel (72) über eine Justierscheibe (128; 164, 186, 188) mit einer Aufnahmefläche (110) des Spindelgehäuses (38; 68) gekoppelt sind.

15. Verwendung eines Satzes (182) von Justierscheiben (128; 164, 186, 188) zur Ausrichtung einer Spindel (40; 70, 72) einer Werkzeugmaschine (10), insbesondere gemäß dem Verfahren nach einem der Ansprüche 1 bis 12.
